(19) Europäisches Patentamt / European Patent Office / Office européen des brevets

(11) **EP 3 297 236 A1**

(12) **EUROPEAN PATENT APPLICATION**

(43) Date of publication:
**21.03.2018 Bulletin 2018/12**

(21) Application number: **16306171.6**

(22) Date of filing: **15.09.2016**

(51) Int Cl.:
***H04L 25/02*** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Mitsubishi Electric R & D Centre Europe B.V.
1119 NS Schiphol Rijk (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **NOUREDDINE, Hadi
35000 RENNES (FR)**
• **LI, Qianrui
35000 RENNES (FR)**

(74) Representative: **Cabinet Plasseraud
66, rue de la Chaussée d'Antin
75440 Paris Cedex 09 (FR)**

(54) **EFFICIENT SPARSE CHANNEL ESTIMATION BASED ON COMPRESSED SENSING**

(57)     The present invention relates to a method of channel estimation including:
- reception of measurements from a transmitter having a plurality of transmit antennas at a receiver having a plurality of receive antennas;
characterized in that the method includes:
- a first determination of at least one set of angles of departure based on the received measurements, each angle of departure being associated to at least one path of the channel for a radio transmission between the transmitter and the receiver;
- a second determination of a plurality of sets of at least one parameter based on the determined set of angles of departure, each set of at least one parameter being associated to a path of the channel for a radio transmission between the transmitter and the receiver.

**FIG. 2**

## Description

The present invention relates to channel estimation based on compressed sensing, and more specifically to the case where the channel matrix is expected to be sparse.

Millimeter wave (mmWave) wireless communication, which makes use of carrier frequencies going from 30 gigahertz (GHz) to 300 GHz, is expected to be a key feature, for instance, for future 5G cellular systems. A major benefit of using such high frequencies is the availability of much greater spectrum for higher data rates.

Millimeter wave propagation is especially characterized by high path loss in free space, high penetration loss through building materials, weak diffraction, and vulnerability to blockage. Therefore, highly directional adaptive antenna arrays at both transmission and reception sides have to be used for compensating propagation impairments and enabling cellular coverage over distances of few hundred meters.

Directional arrays are usually constructed using a very large number of antenna elements, for instance tens to several hundreds.

In addition to high directional gain, the use of large antenna arrays enhances spatial multiplexing since narrower beams can be realized.

Directional gain and spatial multiplexing can be achieved by a careful design of beamforming precoders and combiners at transmission and reception sides, respectively. This design relies on the amount of channel state information (CSI) available on the system, which can be obtained by a channel estimation method, as detailed below.

For instance, in a narrowband flat-fading channel with multiple-input/multiple-output (MIMO), the system can typically be modeled as:

$$\mathbf{y} = \mathbf{Hx} + \mathbf{n}$$

where x and y are respectively the transmit and the receive vectors, $\mathbf{n}$ is the noise vector, and $\mathbf{H}$ is the channel matrix, which size is equal to the product between the number of transmit antennas and the number of receive antennas. Typically, the matrix $\mathbf{H}$ characterizes the channel transition, and each component $H_{ij}$ of $\mathbf{H}$ represents the channel gain from $j^{th}$ transmit antenna to $i^{th}$ receive antenna. With channel estimation methods, one generally tries to estimate the matrix $\mathbf{H}$, or an expression of $\mathbf{H}$ in a particular basis (for instance, in angular domain).

Commonly, channel estimation can be done by transmitting training signals, also called pilots, which are known by the receiver. Then, at the receiver, measurements for channel estimation are obtained by processing the signals at receive antennas using combiners. The number of transmitted pilots is classically equal to the number of transmit antennas. When the number of transmit antennas is very large, as in the above-mentioned application, training overhead could become prohibitive as it would require a large percentage of available resources.

The channel is usually modeled as a contribution of propagation paths. In a narrowband communication, a path is described by four parameters: angle of departure (AOD) azimuth and elevation, angle of arrival (AOA) azimuth and elevation, amplitude and phase. In mmWave propagation, many paths are highly attenuated, and the number of paths with significant gain is expected to be small compared to the size of the channel matrix. Consequently, and due to the high directivity of antenna arrays, the channel matrix is expected to be sparse when expressed in the angular domain.

A matrix or a vector is said to be "sparse" if it only has a few non-zero entries compared to its dimension.

Channel sparseness has been exploited by several solutions for drastically reducing the needed number of transmitted pilots. These solutions are implemented, for instance, using compressed sensing (CS) algorithms.

Several works have proposed solutions for sparse channel estimation based on CS algorithms, and which are suitable for multi-user communications. Generally, these solutions implement greedy pursuit algorithms, such as orthogonal matching pursuit (OMP). These algorithms are processed in an iterative way. At each iteration, a new path contributing to the channel is identified and its amplitude and phase are estimated. The identification comprises a simultaneous recovery of AOD and AOA. Iterations are processed until a stopping criterion is met.

Such solutions have drawbacks. The computational complexity order for identifying one path is indeed proportional to the product of the numbers of antennas at transmitter and receiver. With tens to several hundred antennas at both transmitter and receiver, the complexity becomes very high for practical and fast implementation.

There is thus a need for a method with reduced computational complexity to efficiently estimate sparse channel.

The invention relates to a method of channel estimation including a reception of measurements from a transmitter having a plurality of transmit antennas at a receiver having a plurality of receive antennas. More particularly, the method includes:

- a first determination of at least one set of first angles based on the received measurements, each first angle being associated to at least one path of the channel for a radio transmission between the transmitter and the receiver;

- a second determination of a plurality of sets of at least one parameter based on the determined set of first angles, each set of at least one parameter being associated to a path of the channel for a radio transmission between the transmitter and the receiver.

It is meant by "channel estimation" here above a determination of a set of possible signal propagation paths between the transmitter and the receiver, or in an equivalent way the estimation of any representation of the channel matrix in a particular basis (for instance in angular domain).

A "possible propagation path" designates a path having a significant gain. For instance, in highly directional systems for which processing is performed in angular domain, only a few paths have significant gain.

The first determination step can thus include a determination of first angles which correspond to possible propagation paths, noting that there might be several paths sharing the same first angle. Therefore, said propagation paths can be identified during the aforesaid second determination, by computing other parameters. According to a general approach of the invention, different parameters characterizing the propagation paths are estimated successively, instead of being estimated simultaneously. This feature reduces the computational complexity of the algorithm used for determining a path, and thus the global complexity of the entire channel estimation process.

In an embodiment, the angles determined during the first determination step can be angles of departure. In that embodiment, the second determination can include computation of angles of arrival associated to possible propagation paths for every angle of departure determined during the first determination. Phase or amplitude of a path associated to a pair of angles (one angle of departure and one angle of arrival) can thus be determined.

In other terms, AOAs are identified during the first determination. Then, propagation paths are identified during the second determination by computing their AOAs, noting that there might be several paths sharing the same AOD but with different AOAs. For a given AOD, the estimation of phase and amplitude of a path can thus be done during the second determination after finding the AOA.

With such a method, the complexity of first determination is proportional to the number of transmit antennas, and the complexity of second determination is proportional to the number of receive antennas. The overall complexity of the solution is equal to the sum of complexities these two determination steps. Thus, the complexity is no longer a function of the product of the numbers of antennas at transmission and reception, as for the existing solutions.

In an embodiment where the receiver has at least one combiner, the first determination includes estimating a set of at least one channel vector, each channel vector $h_{a,j}$ being relative to one combiner among the at least one combiner of the receiver, based on the formula:

$$\mathbf{y_j} = \mathbf{P^* D_t h_{a,j}^*} + \mathbf{n}$$

where:

$\mathbf{P}$ is a matrix obtained with a set of signals transmitted from the transmitter;

$\mathbf{P^*}$ denotes the conjugate transpose matrix of matrix $\mathbf{P}$;

$\mathbf{y_j}$ is a vector of measurements available at the current combiner;

$\mathbf{D_t}$ is a matrix relative to the transmit antennas;

$\mathbf{n}$ is a measurement noise vector;

and $\mathbf{h_{a,j}^*}$ denotes the conjugate transpose vector of channel vector $\mathbf{h_{a,j}}$.

It is meant by "combiner" a device which delivers in output a combination (for instance, a linear combination) of signals received at receive antennas.

$\mathbf{D_t}$ can be relative, for instance, to the geometry of the transmit antennas. It can also account for antennas gain and radiation pattern.

The signals transmitted from transmitter to receiver can be known from the receiver. In that way, if the matrix $\mathbf{D_t}$ is also know, it is possible, based on received measurements at a combiner, to estimate the vector $\mathbf{h_{a,j}}$ associated to this combiner.

For multiple combiners, the channel vectors, expressed in the angular domain, share the same support of non-zero entries, or in other words same AODs for which channel paths exist. This is due to the fact that the physical propagation paths constituting these channels are the same.

At the end of this step, estimates $\hat{h}_{a,j}$ of matrices $\mathbf{h_{a,j}}$ (where j is the index of a combiner out of the total number of combiners) associated to different combiners are available.

The second determination can thus include:

- computing a set of vectors based on non-zero entries of the estimated set of at least one channel vectors;
- for each computed vector $\mathbf{v_q}$ from said computed set of vectors, estimating a column $\mathbf{H_{a,q}}$ of a channel matrix $\mathbf{H_a}$ expressed in angular coordinates, based on the formula:

$$\mathbf{v_q} = \mathbf{Q^* D_r H_{a,q}} + \mathbf{n_q}$$

where:

$\mathbf{Q}$ is a matrix relative to the at least one combiner;

**Q\*** denotes the conjugate transpose matrix of matrix **Q**;

$D_r$ is a matrix relative to the receiver;

and $n_q$ is an estimation noise vector.

$D_r$ can be a matrix relative to the geometry of the receiver. It can also account for antennas gain and radiation pattern.

In an embodiment, if $\hat{h}_{a,j,q}$ denotes the $q^{th}$ non-zero entry of $h_{a,j}$, a vector $v_q$ (for $q \in \{1,2,...,k\}$, where k is the number of non-zero entries of estimated vectors $\hat{h}_{a,j}$) can be defined as:

$$\mathbf{v_q} = [\hat{h}_{a,1,q}, ..., \hat{h}_{a,L_C,q}]^T$$

where $L_c$ is the number of combiners and $(.)^T$ denotes the transpose operation.

Each vector $v_q$ can be seen as a measurement vector for $H_{a,q}$ and then can be used to estimate $H_{a,q}$. The estimation of all vectors $H_{a,q}$ associated to propagation paths is thus equivalent to the estimation of the entire set of propagation paths.

In an alternative embodiment, the angles determined during the first determination step are angles of arrival, while the second determination includes computation of angles of departure associated to respective propagation paths. Phase or amplitude of a path associated to a pair of one angle of arrival and one angle of departure can thus be determined.

Alternatively, first angles include angles of departure and angles of arrival, and the first determination includes:

- a determination of a set of angles of departure based on the received measurements, each first angle being associated to at least one path of the channel for a radio transmission between the transmitter and the receiver;

- a determination of a set of angles of arrival based on the received measurements, each first angle being associated to at least one path of the channel for a radio transmission between the transmitter and the receiver.

The second determination can then consist in computing phases or amplitudes associated to possible propagation paths, based on determined angles of departure and angles of arrival.

In this embodiment, angles of departure and angles of arrival are determined during two separate steps, each step being performed based on the received measurements. Preferably, these two steps can be performed in parallel.

The set of possible paths is then the Cartesian product of the two determined sets. In the second determination, a set of propagation paths is sought among the set of possible paths, and amplitude and phase can be computed for each selected propagation path.

Typically, the first determination can be performed by a Simultaneous Orthogonal Matching Pursuit algorithm. This algorithm enables to jointly recover the support for all sparse vectors to estimate, and thus improves the recovery accuracy.

The second determination can be performed by an Orthogonal Matching Pursuit algorithm. One iteration of such algorithm can be used for recovering one propagation path. The Orthogonal Matching Pursuit algorithm is run once for every angle determined during the first determination. Several runs of this algorithm can be implemented in parallel and thus the execution of the process can be advantageously accelerated.

Another aspect of the invention relates to a channel estimation device, comprising:

- a receiver for receiving measurements from a transmitter having a plurality of transmit antennas;

- a circuit for:

  - determining at least one set of first angles based on the received measurements, each first angle being associated to at least one path of the channel for a radio transmission between the transmitter and the receiver;

  - determining a plurality of sets of at least one parameter based on the determined set of first angles, each set of at least one parameter being associated to a path of the channel for a radio transmission between the transmitter and the receiver.

A third aspect relates to a computer program product, comprising instructions for performing the method previously described, when run by a processor

Other features and advantages of the method and device disclosed herein will become apparent from the following description of non-limiting embodiments, with reference to the appended drawings.

The present invention is illustrated by way of example, and not by way of limitation, in the figures of the accompanying drawings, in which like reference numerals refer to similar elements and in which:

- Figure 1 is an example of classical hybrid architecture on which the present method can be applied;

- Figure 2 is a flow chart illustrating the different steps of the channel estimation method according to a possible embodiment of the present invention;

- Figure 3 is a flow chart describing a determination of AODs associated with existing propagation paths in a possible embodiment of the present invention;

- Figure 4 is a flow chart describing a determination of propagation paths in a possible embodiment of the present invention;

- Figure 5 is a possible embodiment for a device that enables the present invention.

As previously mentioned, large antenna arrays can be employed in mmWave systems to overcome path losses in this frequency band.

The hardware of large arrays operating at mmWave is subject to a constraint that impacts the number and design of pilots and combiners that can be processed. Actually, for cost and power considerations, it can be difficult to assign a radiofrequency (RF) chain per antenna.

A common solution to reduce the number of RF chains is hybrid analog/digital MIMO architectures.

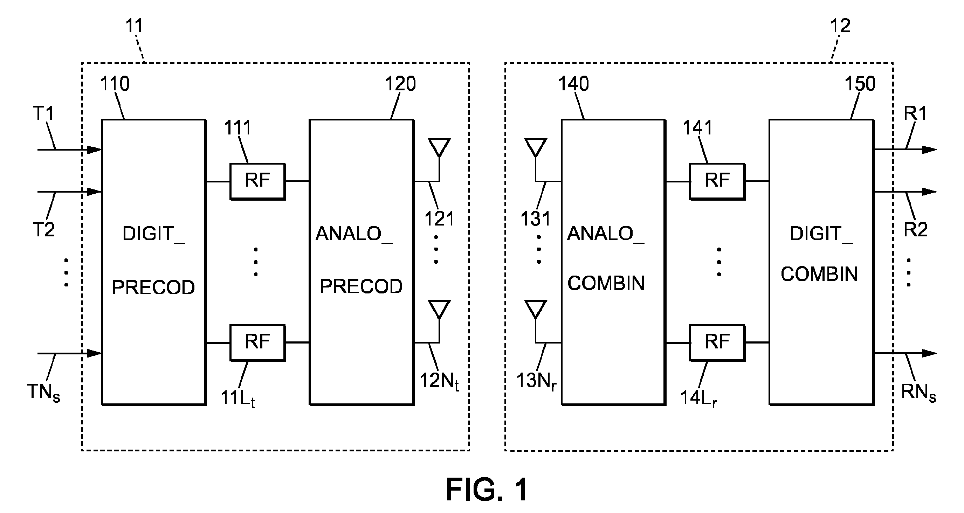

Figure 1 is an example of classical hybrid architecture.

According to classical MIMO architectures, signals T1, T2, ..., $TN_s$ can be transmitted by a transmitter 11 having a plurality of transmit antennas 121, ..., $12N_t$ to a receiver 12 having a plurality of receive antennas 131, ..., $13N_r$. In output of the receiver 12, signals R1, R2, ..., $RN_s$ are delivered.

In hybrid architectures, processing is divided between analog and digital domains. At the transmitter side, precoding is then performed by a baseband digital precoding unit 110 and an RF analog precoding unit 120. The number, say $L_t$ (with $L_t \leq N_t$, where $N_t$ denotes the number of transmit antennas), of digital branches is equal to the number of RF chains 111, ..., $11L_t$.

Similarly, at the receiver side, combining is performed by an RF analog combining unit 140 and a baseband digital combining unit 150. The number, say $L_r$ (with $L_r \leq N_r$, where $N_r$ denotes the number of receive antennas), of digital branches is equal to the number of RF chains 111, ..., $11L_r$.

The number of RF chains at both transmitter and receiver side are therefore lower than the number of transmit and receive antennas.

In a first embodiment the proposed invention can be used for instance, but without limitation, for the estimation of a narrowband block fading channel. This channel can be modeled by a baseband channel matrix, denoted here by **H,** which is a complex-valued matrix of size $N_r$ x $N_t$, $N_r$ and $N_t$ being the numbers of antennas at reception and transmission, respectively.

The channel matrix **H** can also be expressed in the angular domain. The obtained matrix, denoted by $\mathbf{H_a}$, is linked to **H** by the formula:

$$\mathbf{H} = \mathbf{D}_r \mathbf{H}_a \mathbf{D}_t^*$$

where $\mathbf{H_a}$ is the channel matrix expressed in angular coordinates, and $\mathbf{D_r}$ and $\mathbf{D_t}$ are basis (or dictionary) matrices which columns usually correspond to steering directions. $X^*$ denotes the conjugate transpose matrix of a matrix $X$.

As previously evoked, in mmWave propagation, only a few paths have significant gain due to high path attenuation and loss. When antenna arrays are highly directive, the channel matrix expressed in the angular domain, denoted by $\mathbf{H_a}$, is usually sparse, which means that it only has a few non-zero entries.

One purpose of channel estimation can be estimating the (unknown) matrix $\mathbf{H_a}$.

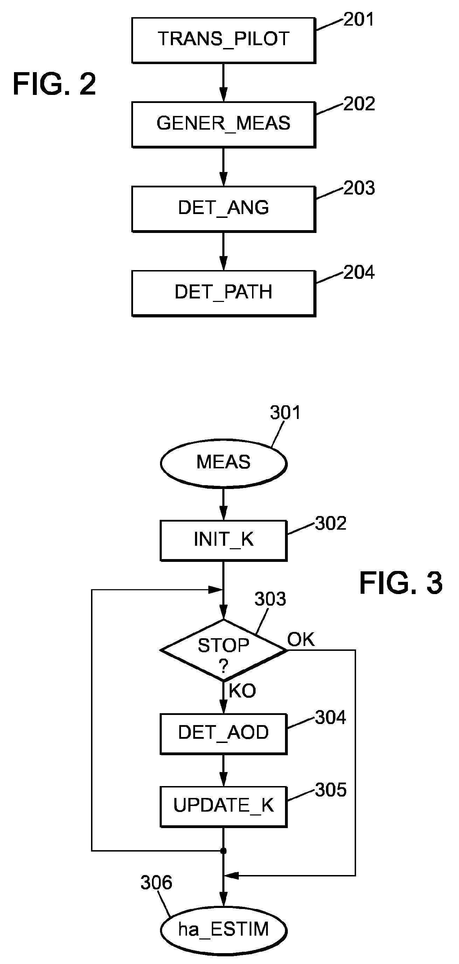

Figure 2 is a flow chart illustrating the different steps of the channel estimation method according to a possible embodiment of the present invention.

In step 201, a set of $L_p$ vector signals $\mathbf{p_1, p_2, ..., p_{L_p}}$, also called "pilots" are transmitted from the transmitter to the receiver. These pilots are known by the receiver. In a first embodiment, pilots are not tailored to a specific receiver. In another embodiment they can be used for channel estimation by multiple receivers.

In step 202, $L_c$ combiners $\mathbf{q_1, q_2, ... q_{L_c}}$ are applied to signals received at reception antennas. This processing generates measurements which can be used for channel estimation.

For instance, a scalar measurement y generated from one pilot $\mathbf{p_i}$ and one combiner $\mathbf{q_j}$, and collected at the associated output of the digital combining unit (element 150 of figure 1) can be modeled according to the following equation:

$$y = \mathbf{q}_j^* \mathbf{H} \mathbf{p}_i + \mathrm{n}$$

where n denotes (scalar) measurement noise, which can be assumed to be, for instance, zero-mean complex Gaussian noise.

At step 203, a determination of AODs associated with existing propagation paths is performed. By "existing" (or "possible") propagation path, it is meant a path from an array of transmit antennas to an array of receive antennas, for which the gain is significant enough. In one embodiment, this determination step will thus be performed by fixing a criterion to evaluate either the gain of different paths is significant or not.

At step 204, a complete determination of propagation paths (for instance, the determination of other parameters such as AOAs, amplitudes and phases) is achieved, based on the AODs previously recovered. At the end of step 204, an estimate of the channel matrix in angular domain $\mathbf{H_a}$ is available.

In one embodiment, steps 203 and 204 can be performed at the receiver. In another embodiment, the architecture assumes channel reciprocity (for example in a frequency division duplex system), and these steps can be performed at transmitter using uplink pilots.

It will be noticed that in prior art, only one step is usually performed to determine simultaneously all the parameters (for instance, AODs and AOAs). In the present method, the determination of different parameters is done in two different steps (203 and 204).

Separating the determination of AODs on the one hand, and the estimation of other parameters associated to channels paths on the other hand, reduces the computational complexity of the algorithm.

For each determined propagation path, the complexity of first step is indeed proportional to the number of transmit antennas, and the complexity of step 2 is proportional to the number of receive antennas. The overall complexity of this solution is equal to the sum of complexities of steps 1 and 2. Thus, this complexity is not a function of the product of the numbers of antennas at transmission and reception, as for the existing solutions where AODs and AOAs are simultaneously recovered.

Figure 3 is a flow chart describing a determination of AODs associated with existing propagation paths in a possible embodiment of the present invention. It presents a possible example of realization for step 203 of figure 2.

The transmission antennas and the output of one combiner $\mathbf{q_j}$ ($j \in \{1,...,L_c\}$) can be seen as a multiple input single output (MISO) system. The equivalent channel vector of this MISO system can be obtained by multiplying the MIMO channel matrix by the combiner vector, as follows:

$$\mathbf{h_j} = \mathbf{q_j^* H}$$

The equivalent MISO channel vector can be expressed in angular coordinates as follows:

$$\mathbf{h_{a,j}} = \mathbf{q_j^* D_r H_a}$$

In mmWave applications, vectors $\mathbf{h_{a,j}}$ are expected to be sparse. The entries of vectors $\mathbf{h_{a,j}}$ are associated to AODs. Estimating AODs of existing propagation paths can then be done by estimating the vectors $\mathbf{h_{a,j}}$, based on a set of measurements 301 (this set is typically obtained at the end of the step 202 of figure 2).

For instance, if $\mathbf{P} = [\mathbf{p_1},...,\mathbf{p_{L_p}}]$ denotes the matrix composed by the $L_p$ pilots $\mathbf{p_1}, \mathbf{p_2}, ..., \mathbf{p_{L_p}}$, then, for each combiner $\mathbf{q_j}$ ($j \in \{1,...,L_c\}$), $L_p$ measurements are available at the receiver and can be given by:

$$\mathbf{y_j} = \mathbf{P^* D_t h_{a,j}^*} + \mathbf{n_j}$$

where $\mathbf{y_j}$ is the measurement vector, and $\mathbf{n_j}$ is a measurement noise vector.

One combiner defines one MISO channel vector. For multiple combiners, the MISO channel vectors, expressed in the angular domain, share the same support of non-zero entries, or in other words same AODs for which propagation paths exist. This is due to the fact that the physical propagation paths constituting these channels are the same.

By jointly recovering the support for all these sparse vectors, the recovery accuracy is expected to be improved. Compressed Sensing (CS) tools provide several algorithms for joint sparse recovery. One such algorithm is, for instance, Simultaneous Orthogonal Matching Pursuit (SOMP), which is an iterative algorithm which identifies, at each iteration, a new non-zero entry of the sparse vectors. The iterations of the algorithm end when a stopping criterion is met. The stopping criteria can, for instance, be reaching a predefined number of iterations, or having a residual fall below a threshold. A residual is obtained by subtracting from the measurements the contributions of the already identified entries of the sought sparse vectors.

The AOD estimation procedure can then be described as follows:

- In step 302, a counting variable k is thus initialized: k = 0.

- A test (step 303) is then realized to know if the stopping criterion is met or not:

 - If the criterion is met, the algorithm ends and the set of recovered AODs is produced in output;

 - Otherwise, an AOD associated to an existing path is determined (step 304), and added to the set of recovered AODs (step 305), the counting variable k is incremented ($k \leftarrow k+1$), and the test 303 is realized again.

By the end of SOMP iterations, the output is estimates of the angular domain representations of MISO channel vectors. For the $j^{th}$ combiner $\mathbf{q_j}$, out of $L_c$, the algorithm provides an estimate $\hat{\mathbf{h}}_{\mathbf{a,j}}$ of the equivalent channel expressed in angular coordinates $\mathbf{h_{a,j}}$. At the end of the algorithm, a set of estimates $\hat{\mathbf{h}}_{\mathbf{a,1}},...,\hat{\mathbf{h}}_{\mathbf{a,L_c}}$ (element 306) is available.

Let k denote the number of iterations of SOMP realized for the estimation of $\mathbf{h_{a,j}}$. Then estimate vectors $\hat{\mathbf{h}}_{\mathbf{a,j}}$ (for $j \in \{1,...,L_c\}$), have only k non-zero entries. The indices of these non-zero entries correspond to columns of $\mathbf{H_a}$ that are identified as non-equal to zero, or in other words, to AODs corresponding to propagation paths.

It can be notice that the procedure for estimating AODs not only requires the knowledge of pilots at the receiver, but also the knowledge of dictionary matrix $\mathbf{D_t}$. In other words, the geometry of the transmitter antenna array needs to be known at receiver. Some parameters defining this geometry are, for instance, antenna spacing for a uniform linear array (ULA), number of antenna rows and columns and vertical and horizontal antenna spacing for a uniform planar array (UPA), or antenna polarization information.

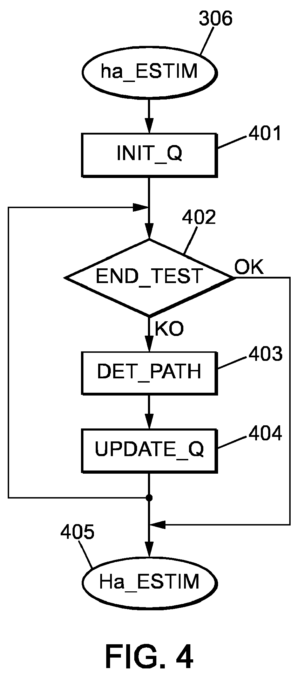

Figure 4 is a flow chart describing a determination of propagation paths in a possible embodiment of the present invention. It presents a possible example of realization for step 204 of figure 2.

The inputs of the flow chart represented in figure 4 are the estimates $\hat{h}_{a,1}$, ..., $\hat{h}_{a,L_c}$ previously determined. As said before, these vectors $\hat{h}_{a,j}$ (for $j \in \{1,...,L_c\}$), have a fixed number k of non-zero entries.

Let $\hat{h}_{a,j,q}$ denote the (scalar) $q^{th}$ non-zero entry of $\hat{h}_{a,j}$, and define the following vector:

$$\mathbf{v}_q = \left[ \hat{h}_{a,1,q}, ..., \hat{h}_{a,L_c,q} \right]^T$$

where $Y^T$ denotes the transpose vector of a vector Y. This vector can be written as:

$$\mathbf{v}_q = \mathbf{Q}^* \mathbf{D}_r \mathbf{H}_{a,q} + \mathbf{n}_q$$

where $Q = [\mathbf{q}_1,...,\mathbf{q}_{L_c}]$ is the matrix of combiners, $\mathbf{H}_{a,q}$ is the $q^{th}$ column of $\mathbf{H}_a$ identified as non equal to zero, and $\mathbf{n}_q$ is an estimation noise vector. The total number of columns of $\mathbf{H}_a$ identified as non equal to zero is k.

Vector $\mathbf{v}_q$ can be seen as a measurement vector for $\mathbf{H}_a,\mathbf{q}$, and can be used to recover $\mathbf{H}_{a,q}$ by means of a CS algorithm, for instance an Orthogonal Matching Pursuit (OMP) algorithm. The number of OMP iterations corresponds to the number of recovered paths for the AOD associated to $\mathbf{H}_a,\mathbf{q}$.

The propagation paths estimation procedure can then be described as follows:

- In step 401, a counting variable q is initialized to 0 (q = 0);

- In step 402, the current variable q is compared to k, to determine whether or not the procedure has to be stopped:

  - If q ≤ k (test KO), a recovery operation is applied to estimate $\mathbf{H}_{a,q}$ based on $\mathbf{v}_q$ (step 403); the counting variable q is then incremented (step 404: q ← q+1);

  - If q > k (test OK), the procedure ends and the complete set (405) of estimates $\hat{\mathbf{H}}_{a,q}$ of $\mathbf{H}_{a,q}$ is delivered in output. It is then possible to construct an estimate $\hat{\mathbf{H}}_a$ of matrix $\mathbf{H}_a$ based on the estimates $\hat{\mathbf{H}}_{a,q}$.

It has to be noticed that the procedure thus requires applying k recovery operations for the k vectors $\mathbf{H}_{a,q}$ (q ∈ {1,...,k}). In a preferred embodiment, these operations are implemented in parallel.

The estimate of $\mathbf{H}_a$ can be used for the design of beamforming precoders and combiners or for the feedback of CSI to the transmitter without the need to compute matrix $\mathbf{H}$.

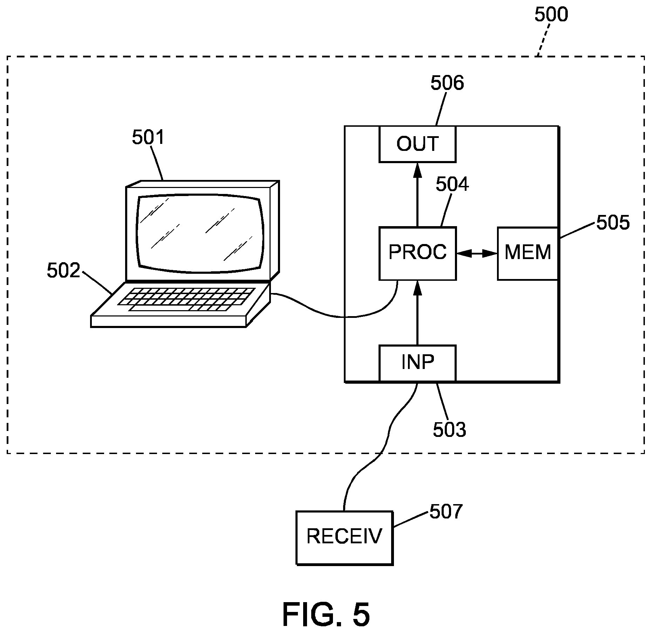

Figure 5 is a possible embodiment for a device that enables the present invention.

In this embodiment, the device 500 comprise a computer, this computer comprising a memory 505 to store program instructions loadable into a circuit and adapted to cause circuit 504 to carry out the steps of the present invention when the program instructions are run by the circuit 504.

The memory 505 may also store data and useful information for carrying the steps of the present invention as described above.

The circuit 504 may be for instance:

- a processor or a processing unit adapted to interpret instructions in a computer language, the processor or the processing unit may comprise, may be associated with or be attached to a memory comprising the instructions, or

- the association of a processor / processing unit and a memory, the processor or the processing unit adapted to interpret instructions in a computer language, the memory comprising said instructions, or

- an electronic card wherein the steps of the invention are described within silicon, or

- a programmable electronic chip such as a FPGA chip (for « Field-Programmable Gate Array»).

This computer comprises an input interface 503 for the reception of measurements used for the above method according to the invention and an output interface 506 for providing either the set of estimated vectors $\hat{\mathbf{H}}_{a,q}$ (with q ∈ {1,...,k}) or the estimated matrix $\hat{\mathbf{H}}_a$.

To ease the interaction with the computer, a screen 501 and a keyboard 502 may be provided and connected to the computer circuit 504.

Furthermore, the flow chart represented in figure 2 can represent steps of a program which may be executed by a processor located in the receiver, for instance. As such, figure 2 may correspond to the flow chart of the general algorithm of a computer program within the meaning of the invention.

In an alternative realization mode, the recovery order is reversed, and AOAs are firstly recovered, and remaining paths parameters are then recovered based on the estimated AOAs. Reversing the order could improve or deteriorate the recovery accuracy, depending on the number of antennas at transmission and reception and number of precoders and combiners.

The invention can be applied for the estimation of a frequency selective channel. For example, in an orthogonal frequency division multiplexing (OFDM)-like system, the paths constituting the MIMO channel matrices at multiple frequency sub-bands share the same AODs and AOAs but only differ in phases and amplitudes.

A joint recovery of AODs and AOAs over multiple sub-bands or sub-carriers can thus improve the recovery accuracy. SOMP could be applied for this purpose. In a code division multiple access (CDMA)-like system or ultra-wide band (UWB)-like system, the invention can be applied to estimate the MIMO channel at the output of a correlator branch of the receiver. An example of a receiver in a CDMA system is a rake receiver with multiple correlator branches.

Alternatively, the first determination step can be applied twice, where the first application is for the determination of the set of angles of departure of possible paths, and the second application is for the determination of the set of angles of arrival of possible paths. The set of possible paths is then the Cartesian product of the two determined sets.

It is meant by "Cartesian product of two sets" A and B, the set of all ordered pairs (a,b), where a $\in$ A and b $\in$ B.

Then in step two, paths are sought among the set of possible paths and their amplitudes and phases are computed.

The present method can be used for many applications, such as cellular access between base stations and user equipments or terminals, backhaul between two edge cells or between an edge cell and core network, point-to-point and device-to-device communication, ...

Of course, the present invention is not limited to the embodiments described above as examples. It extends to other variants.

For example, this solution applies also when matrix $H_a$ is not sparse but rather compressible. $H_a$ is said to be compressible if it has a few dominant entries, and setting the non-dominant entries to zero does not result in significant error.

In an alternative realization mode, the AODs at the output of the first estimation procedure are fed back to the transmitter and exploited to design beamforming precoders. Then beamformed pilots are transmitted and used for recovering AOAs and designing beamforming combiners. The benefit of this strategy comes from the increased SNR of beamformed pilots.

**Claims**

1. A method of channel estimation including:

   - reception of measurements (301) from a transmitter (11) having a plurality of transmit antennas (121,12$N_t$) at a receiver (12) having a plurality of receive antennas (131,13$N_r$);

   **characterized in that** the method includes:

   - a first determination (203) of at least one set of first angles based on the received measurements (301), each first angle being associated to at least one path of the channel for a radio transmission between the transmitter (11) and the receiver (12);
   - a second determination (204) of a plurality of sets of at least one parameter based on said determined set of first angles, each set of at least one parameter being associated to a path of the channel for a radio transmission between the transmitter (11) and the receiver (12).

2. The method according to claim 1, wherein said first angles are angles of departure.

3. The method according to claim 2, wherein said second determination includes computation of angles of arrival.

4. The method according to claim 3, wherein said second determination includes furthermore computation of phases or amplitudes, based on said angles of departure and angles of arrival.

5. The method according to one of claims 2 to 4, wherein the receiver (12) has at least one combiner, and wherein said first determination (203) includes estimating a set of at least one channel vector, each channel vector $\mathbf{h_{a,j}}$ being relative to one combiner among the at least one combiner of the receiver, based on the formula:

$$\mathbf{y_j} = \mathbf{P^* D_t h_{a,j}^*} + \mathbf{n}$$

where:

   P is a matrix obtained from a set of signals transmitted from the transmitter;
   **P\*** denotes the conjugate transpose matrix of matrix **P**;
   $\mathbf{y_j}$ is a vector of measurements available at the current combiner;
   $\mathbf{D_t}$ is a matrix relative to the transmit antennas;
   n is a measurement noise vector;
   and $\mathbf{h_{a,j}^*}$ denotes the conjugate transpose vector of channel vector $\mathbf{h_{a,j}}$.

6. The method according to claim 5, wherein the second determination (204) includes:

   - computing a set of vectors based on non-zero entries of the estimated set (306) of at least one channel vectors;
   - for each computed vector $\mathbf{v_q}$ from said computed set of vectors, estimating a column $\mathbf{H_{a,q}}$ of a channel matrix $\mathbf{H_a}$ expressed in angular coordinates, based on the formula:

$$\mathbf{v_q} = \mathbf{Q}^* \mathbf{D_r} \mathbf{H_{a,q}} + \mathbf{n_q}$$

where:

Q is a matrix relative to the at least one combiner;

$\mathbf{Q}^*$ denotes the conjugate transpose matrix of matrix Q;

$\mathbf{D_r}$ is a matrix relative to the receiver; and $\mathbf{n_q}$ is an estimation noise vector.

7. The method according to claim 1, wherein said first angles are angles of arrival.

8. The method according to claim 7, wherein said second determination (204) includes computation of angles of departure.

9. The method according to claim 8, wherein said second determination (204) includes furthermore computation of phases or amplitudes.

10. The method according to claim 1, wherein said first angles include angles of departure and angles of arrival,

   - wherein said first determination includes:

      - a determination (203) of a set of angles of departure based on the received measurements (301), each first angle being associated to at least one path of the channel for a radio transmission between the transmitter (11) and the receiver (12);
      - a determination (203) of a set of angles of arrival based on the received measurements (301), each first angle being associated to at least one path of the channel for a radio transmission between the transmitter (11) and the receiver (12);

   - and wherein said second determination (204) includes computation of phases or amplitudes, based on determined angles of departure and angles of arrival.

11. The method according to one of the preceding claims, wherein said first determination (203) is performed by a Simultaneous Orthogonal Matching Pursuit algorithm.

12. The method according to one of the preceding claims, wherein said second determination (204) is performed by an Orthogonal Matching Pursuit algorithm.

13. A channel estimation device, comprising:

   - a receiver for receiving measurements (301) from a transmitter having a plurality of transmit antennas;
   - a circuit for:

      determining (203) at least one set of first angles based on the received measurements, each first angle being associated to at least one path of the channel for a radio transmission between the transmitter and the receiver;
      determining (204) a plurality of sets of at least one parameter based on said determined set of first angles, each set of at least one parameter being associated to a path of the channel for a radio transmission between the transmitter and the receiver.

14. A computer program product, comprising instructions for performing the method as claimed in anyone of claims 1 to 12, when run by a processor.

**FIG. 1**

EP 3 297 236 A1

FIG. 2

TRANS_PILOT — 201

GENER_MEAS — 202

DET_ANG — 203

DET_PATH — 204

301 — MEAS

INIT_K — 302

FIG. 3

303 — STOP ?

OK

KO

DET_AOD — 304

UPDATE_K — 305

306 — ha_ESTIM

FIG. 4

**FIG. 5**

Europäisches
Patentamt

European
Patent Office

Office européen
des brevets

# EUROPEAN SEARCH REPORT

**Application Number**

EP 16 30 6171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO ZHEN ET AL: "Channel Estimation for Millimeter-Wave Massive MIMO With Hybrid Precoding Over Frequency-Selective Fading Channels", IEEE COMMUNICATIONS LETTERS, IEEE SERVICE CENTER, PISCATAWAY, NJ, US, vol. 20, no. 6, 1 June 2016 (2016-06-01), pages 1259-1262, XP011613037, ISSN: 1089-7798, DOI: 10.1109/LCOMM.2016.2555299 [retrieved on 2016-06-08] | 1-4,7-14 | INV. H04L25/02 |
| A | * page 1259 - page 1261 * | 5,6 | |
| X | ADHIKARY ANSUMAN ET AL: "Joint Spatial Division and Multiplexing-The Large-Scale Array Re", IEEE TRANSACTIONS ON INFORMATION THEORY, IEEE PRESS, USA, vol. 59, no. 10, 1 October 2013 (2013-10-01), pages 6441-6463, XP011526827, ISSN: 0018-9448, DOI: 10.1109/TIT.2013.2269476 [retrieved on 2013-09-11] * page 6443 - page 6446 * * page 6449 - page 6450 * * page 6454 * | 1,2,13, 14 | |
| A | HAN YONGHEE ET AL: "Two-stage compressed sensing for millimeter wave channel estimation", 2016 IEEE INTERNATIONAL SYMPOSIUM ON INFORMATION THEORY (ISIT), IEEE, 10 July 2016 (2016-07-10), pages 860-864, XP032940362, DOI: 10.1109/ISIT.2016.7541421 [retrieved on 2016-08-10] * page 861 - page 863 * | 1-14 | |

**TECHNICAL FIELDS SEARCHED (IPC)**

H04L

The present search report has been drawn up for all claims

| Place of search | Date of completion of the search | Examiner |
|---|---|---|
| Munich | 28 February 2017 | Baltersee, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)